# EUROPEAN PATENT APPLICATION

(11) **EP 1 132 189 A1**
(43) Date of publication of application: **12.09.2001**
(21) Application number: 01302187.8
(22) Date of filing: 09.03.2001
(51) Int. Cl.: B29C 45/14

(54) **Improvements in and relating to injection moulding**

(30) Priority: 10.03.2000 GB 0005893
(71) Applicant: NOKIA MOBILE PHONES LTD., 02150 Espoo (FI)
(72) Inventor: Ruck, Shaun, Rickmansworth, Hertfordshire WD3 2LE (GB)
(74) Representative: Jones, Kendra Louise

(57) **Abstract**

A component having a metallic foil surface secured to an injection moulded plastics material substrate is described together with a corresponding method of manufacture. The foil may be secured adhesively to the substrate either as an alternative or in addition to mechanical engagement. Where required, the foil may be pre-shaped to co conform substantially to an internal surface of an injection-moulding tool.

## Description

The present invention relates to a method of injection moulding a plastics material component with a metallic foil surface.

Injection moulding is a common fabrication process and is particularly suited to the production of components such as casings for electronic devices such as radiotelephone handsets and the like. Although it is known to employ insert and outsert techniques that permit the incorporation of metallic components into an injection moulded plastic material product, these techniques are of limited practicality and suitability for producing decorative finishes. Thus, previous attempts to provide a decorative metallic surface effect have concentrated on post-moulding processes such as electrostatic deposition, for example. Such surface finishes are inferior to the extent that they do not impart a true metallic feel to a coated product nor are they particularly resistant to wear.

It is known to use plastics material foil in an injection moulding process in which a metallic foil is sandwiched between inner and outer layers of plastics material. The resulting laminate is intended to provide electrical shielding to a non-conductive housing formed in the mould. However, such an approach does not confer a decorative finish on the housing as the metallic foil is concealed within the laminate.

It is thus an aim of the present invention to provide a decorative surface finish for an injection-moulded plastics material component that has a metallic appearance and tactility in addition to improving the resistance of the component to damage including wear through abrasion. It is a further aim of the invention to seek to provide a method of manufacturing an injection-moulded plastics material component having a metallic decorative surface finish.

Thus, according to one aspect of the invention, there is provided a plastics material component comprising a metallic foil having a decorative surface finish secured to a surface of an injection-moulded plastics material substrate.

If required, an adhesive layer may be applied between the foil and the substrate to assist in forming a secure connection between them. As an alternative or perhaps in addition to the provision of an adhesive layer, the foil and substrate may interengage. Conveniently, the foil may be pre-formed with the required surface features to facilitate the moulding process.

According to another aspect of the invention, a method of forming a plastics material component includes placing a metallic foil within an injection-moulding tool and injecting plastics material into a cavity of said tool which cavity is at least partially bounded by said foil such that subsequently, at least a portion of a surface of said plastics material has said metallic foil secured thereto.

The foil may be subjected to a pre-moulding operation in which decorative and/or functional features such as depressions and/or apertures are formed therein. In addition, the final shape of the foil may be pre-formed completely or partially before moulding the component. In the latter case, the final shape adopted by the foil will be created by the forces due to the injection of plastics material into the mould. Alternatively, the shape adopted by the foil will be created entirely by the forces due to the injection of plastics material into the mould.

In order to aid in understanding the present invention, an embodiment thereof will now be described by way of example and with reference to the accompanying drawings, in which:
Figure 1a is a simplified cross-sectional view of an open injection-moulding tool containing a pre-formed metallic foil in accordance with a method of the invention;
Figure 1b is a similar view of the injection-moulding tool of Figure 1a and containing a moulded component according to the invention;
Figure 2 is a plan view of the moulded component of Figure 1b;
Figure 3 is a cross-sectional view of the component of Figure 1b on the line III-III of Figure 2;
Figure 4 is a cross-sectional view of the component of Figure 1b on the line IV-IV of Figure 2;
Figure 5 is a cross-sectional view of the component of Figure 1b on the line V-V of Figure 2;
Figure 6 is a cross-sectional view of the component of Figure 1b on the line V-V of Figure 2 showing a step in the formation of a fenestration in the component;
Figure 7 is an enlarged cross-sectional view of a variant of the tool of Figure 1b; and
Figure 8 is an enlarged fragmentary cross-section of a finished component formed in the tool of Figure 7.

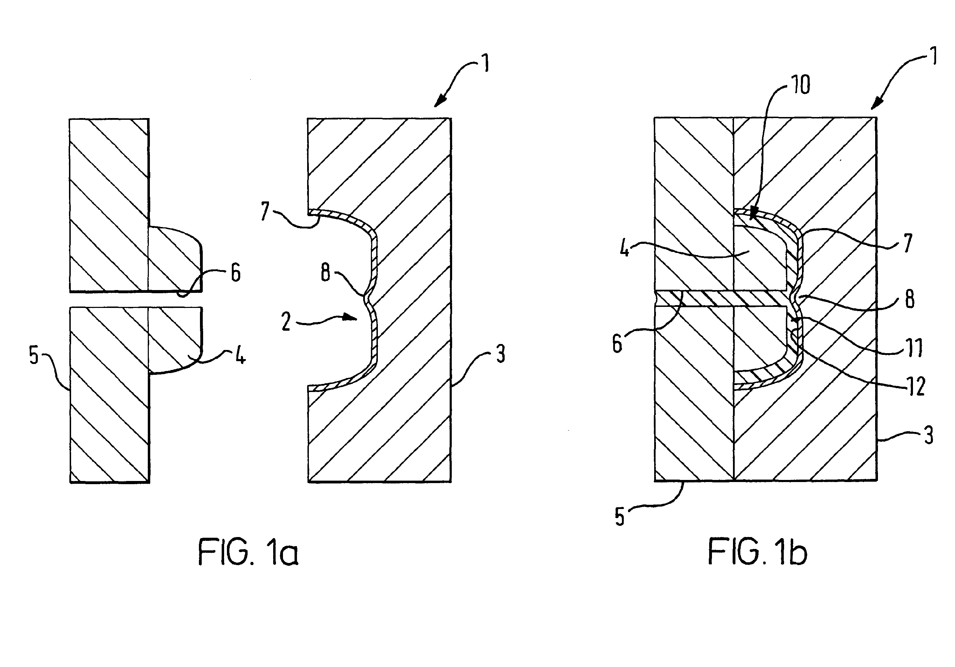

Referring initially to Figures 1a and 1b, there is shown a conventional two part injection-moulding tool 1 having a single cavity 2 formed in a cavity plate 3 and a core 4 supported on a core plate 5. A sprue 6 extends through the core plate 5 into the core 4 where a runner (not shown) delivers, in use, plastics material into the cavity 2 .

Figure 1a shows the tool 1 in an open configuration in which a metallic foil 7 has been placed in the cavity 2. The foil 7 is formed from a precious metal or indeed any metal or alloy which is sufficiently ductile to permit it to conform to the mould during an injection-moulding process. It will be noted that the foil 7 includes a pre-formed depression 8 corresponding in the finished component to an aperture for a key portion of a key-matrix (not shown). Similar depressions are pre-formed for the remaining apertures for the key matrix and display (not shown). Such depressions are formed by stamping the foil with a suitable tool before placing the foil within the tool 1. In order to facilitate a post-moulding manufacturing process described in more detail below, the mould is intended to prevent plastics material accumulating behind the foil in the regions of those depression which will, in the later manufacturing step, be removed to form apertures for the display, key matrix and the like.

Figure 1b shows the closed tool 1 containing a moulded component 10 having a plastics material substrate 11 and the metallic foil 7 secured to a face 12 thereof. The component 10 is then ejected from the tool 1.

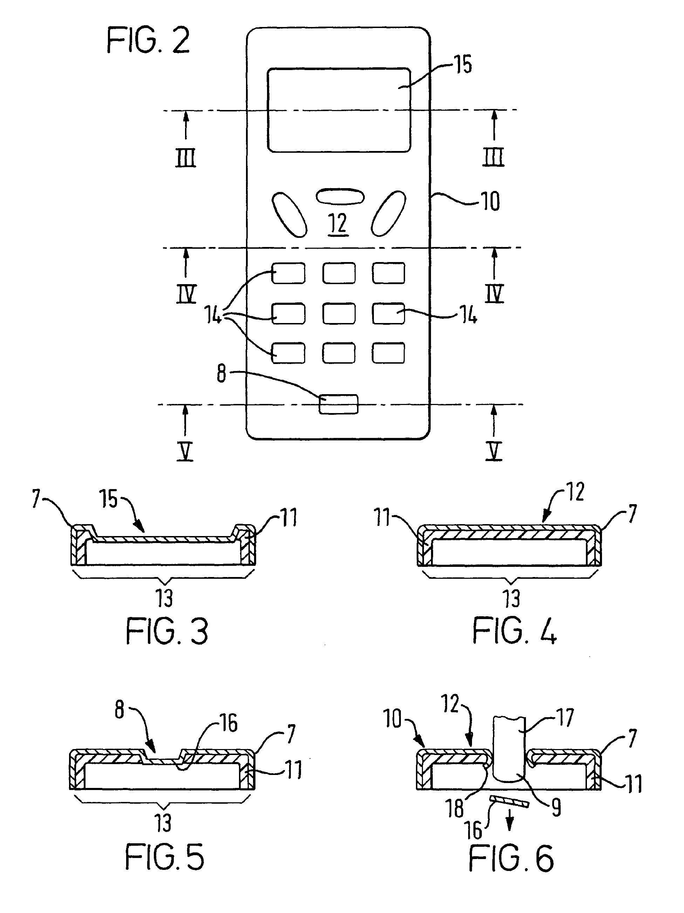

The ejected component 10, which is shown in Figure 2 as a front cover of a radiotelephone handset, has a generally planar face 12 from which depends a shallow peripheral wall 13. The face 12 includes a plurality of relatively small depressions 8,14 clustered towards what will, in use, be a lower face portion of the handset, and one large depression 15 towards what will, again in use, be an upper face portion of the handset. Following a manufacturing step described in more detail below, the plurality of depressions 8,14 are converted into corresponding fenestrations or apertures through which, in a later stage of assembly, buttons of a key matrix (not shown) will protrude. Similarly, following the manufacturing step described below, the large depression 15 will be converted into an aperture through which, in a later stage of assembly, a liquid crystal display (LCD) device (not shown) will be visible.

Figure 6 shows in more detail a post-moulding manufacturing or finishing operation in which a web 16 of foil forming a depression 8 in the face 12 of the moulded component 10 is removed to leave an aperture 9. The operation requires that the component 10 be firmly held in a jig (not shown) whilst a punch 17, only the part of which relates to the removal of the web being shown, removes the web 16. In addition to removing the web 16, the punch 17 also deforms the foil 7 surrounding the periphery of the aperture 9 formed by the removal of the web 16. Because the punch 17 contacts the component 10 on what will be, in use, its exposed face 12, the foil 7 is deformed inwardly, that is away from the exposed face 12 of the component 10. The foil 7 is deformed sufficiently to form a returned or rolled edge 18 such that not only is the substrate 11 concealed from external view but also a mechanical connection is formed between the foil 7 and substrate 11. Clearly, where a plurality of apertures 8,14,15 are formed, such as is in the case of a front cover of a radiotelephone handset, there will be a corresponding increase in the integrity of the mechanical connection between the substrate 11 and foil 7 which will supplement or perhaps replace the requirement for an adhesive layer (not shown) to be placed between the two elements 7,11 of the component 10.

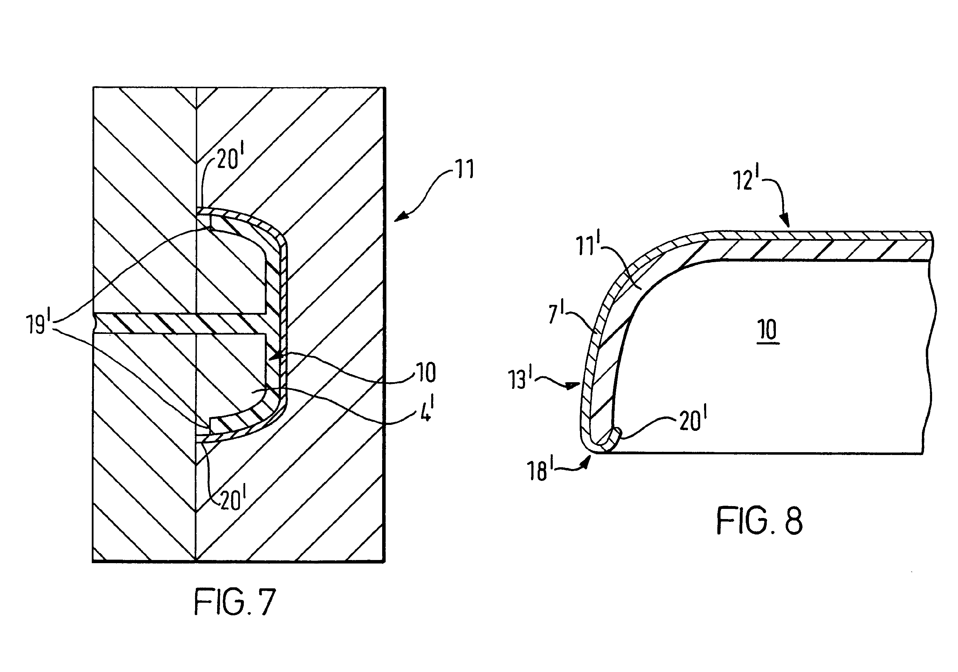

Referring to Figures 7 and 8, these illustrate a variant of the above embodiment in which the injection-moulding tool 1' shown in Figure 7, has been formed with a peripheral step 19' in the core 4' proximate the core plate 5'. This step prevents the component from having a uniform cross-section. Instead, a ribbon of foil 20' is left proud of the peripheral wall 13'. In a later finishing operation, the ribbon of foil 20' is rolled inwardly and thereby conceal the plastics material substrate 11' from external view and also to provide a mechanical connection between the foil 7' and the substrate 11'.

It will be appreciated by those skilled in the art that although the above embodiment describes the use of a single cavity tool, the invention may be applied to multi-cavity tools capable of producing components that are more complex both with respect to shape and also the presence, or otherwise, of a foil surface. Furthermore, it should be understood that any reference to a component in the foregoing may also be taken to include an article. It will also be understood that where an adhesive layer is required between the foil and the substrate then the selection of a suitable adhesive will be within the capacity of the skilled addressee.

## Claims

1. A plastics material component comprising a metallic foil having a decorative surface finish secured to a surface of an injection moulded plastics material substrate.

2. A component as claimed in Claim 1, wherein an adhesive layer is applied between the foil and the external surface of said substrate.

3. A component as claimed in Claim 1 or Claim 2, wherein the foil and substrate interengage.

4. A component as claimed in any preceding Claim, wherein the foil contains at least one aperture.

5. A component as claimed in any preceding Claim, wherein the foil is embossed.

6. A method of forming a plastics material component, includes placing a metallic foil within an injection-moulding tool and injecting plastics material into a cavity of said tool which cavity is at least partially bounded by said foil such that subsequently, at least a portion of a surface of said plastics material has said metallic foil secured thereto.

7. A method as claimed in Claim 6, wherein the foil is pre-shaped to conform at least partially to an internal surface of the tool cavity.

8. A method as claimed in Claim 6 or Claim 7, wherein the tool is formed with a plurality of cavities at least one of which contains said foil.

9. A method as claimed in any one of Claims 6 to 8, in which the foil is embossed before enclosing it within the tool.

10. A method as claimed in any one of Claims 6 to 9, in which at least one aperture is formed in the foil before enclosing it within the tool.

11. A method as claimed in any one of Claims 6 to 10, including the post-moulding step of forming a rolled edge along marginal portions of said component.

12. An injection-moulded plastics material component having a decorative surface finish substantially as described herein with reference to Figures 1 to 6 of the accompanying drawings.

13. An injection-moulded plastics material component having a decorative surface finish substantially as described herein with reference to Figures 7 and 8 of the accompanying drawings.
